# EUROPEAN PATENT SPECIFICATION

(11) **EP 1 781 475 B1**
(45) Date of publication and mention of the grant of the patent: **10.04.2013**
(21) Application number: 05759666.0
(22) Date of filing: 06.07.2005
(51) Int. Cl.: B60G 15/06, B62K 25/04

(54) **SHOCK ABSORBER WITH PRESSURE-SUPPORTED ADJUSTMENT**
STOSSDÄMPFER MIT DRUCKGESTÜTZTER VERSTELLUNG
AMORTISSEUR AVEC REGLAGE PAR PRESSION

(30) Priority: 08.07.2004 NL 1026610
(43) Date of publication of application: 09.05.2007
(73) Proprietor: WP Suspension B.V., 6581 KA Malden (NL)
(72) Inventor: RADT, Marcel, NL-5432 BS Cuijk (NL)
(74) Representative: Riemens, Roelof Harm
(86) International application number: PCT/NL2005/000484
(87) International publication number: WO 2006/006848

(56) References cited:
- FR-A- 2 726 791
- US-A- 4 159 105
- US-A- 4 824 180
- PATENT ABSTRACTS OF JAPAN vol. 007, no. 153 (M-226), 5 July 1983 (1983-07-05) & JP 58 061344 A (SHIYOUWA SEISAKUSHO:KK), 12 April 1983 (1983-04-12)

## Description

The invention relates to a shock absorber according to the preamble of claim 1.

A shock absorber of this kind is by way of example disclosed in NL-C. 1016147. In this a shock absorber for a motorcycle is disclosed, which is composed, in a known way, of a damper piston-cylinder system and a coil spring extending around it. Securing eyelets are provided at the topside and underside of the system. The prestress of the coil spring can be adjusted using what is referred to as a preload adjuster. For this purpose, the topside of the coil spring is supported against a spring cup which can be displaced up and down in the axial direction of the shock absorber by means of a hydraulically acting system. The hydraulically acting system comprises an annular displacement piston-cylinder system, which acts on the spring cup and the pressure of which can be varied by means of an actuating member. The actuating member comprises a control piston-cylinder system which is mounted to the side of the damper piston-cylinder system and in which the position of the control piston can be adjusted by hand by means of a. rotary knob with a threaded spindle. It is in this way possible to vary the pressure in the control piston-cylinder system and to alter the position of the spring cup in the axial direction accordingly.

One drawback of this arrangement is that the adjustment quality leaves something to be desired. The adjustment is carried out by hand; in practice, it has been found that it is relatively difficult to turn the rotary knob. Furthermore, the adjustment has to be carried out when the motorcycle is stationary. Adjustment when the motorcycle is moving is irresponsible. If more than one shock absorber of this type is used on the same vehicle, it is not easy to set a desired adjustment to be exactly equal for each of them. This can lead to different deviations, with adverse consequences for the driving performance and ride comfort.

It is an object of the present invention to at least partially overcome the above drawbacks and/or to provide a usable alternative. In particular, it is an object of the invention to provide a user-friendly shock absorber whereof the damping properties and characteristics can be adapted quickly and easily.

This object is achieved by a shock absorber according to claim 1. In this case, the shock absorber comprises a hydraulic damper cylinder with a damper piston which can be displaced therein. A piston rod is connected to the damper piston. Assembly parts are provided at the free ends of the damper cylinder and the piston rod. First and second spring bases are provided in the vicinity of the assembly parts, with a compression spring enclosed between them. Further there is a hydraulically acting system for adjusting the axial position of at least one of the spring bases with respect to the associated assembly part. The hydraulically acting system comprises a control cylinder with a control chamber and a control piston displaceable therein, as well as a setting chamber, in which a setting piston which interacts with the spring base located in its vicinity is axially displaceable. At one end, the control chamber is in hydraulic communication with the setting chamber. There are pressure means for exerting a pressure greater than ambient.pressure on the opposite side of the control piston from the hydraulic connection to the setting chamber, in which the hydraulically acting system comprises an actuable electric motor or a manual operating feature for adjusting the axial position of the control piston. As a result, the force required for the adjustment can advantageously be reduced, and/or the adjustment time shortened.

In particular, the pressure originating from the pressure means is related to the pressure which is present in the damping medium as a result of the minimal preloading in the compression spring. More particularly, the pressure means are designed to deliver a pressure greater than 5 bar.

In one advantageous embodiment, there is a separate gas chamber which is in communication with the control chamber on the opposite side from the hydraulic connection to the setting chamber. A pressurized gas volume is present in the gas chamber. The level of the gas pressure is in this case related to the pressure which occurs in the working medium of the hydraulic system as a result of the minimum spring preloading.

The pressure means can be used in conjunction with a manual operating feature, for example by means of rotary knob adjustment as used in the prior art. In a preferred embodiment, the pressure means are used in a shock absorber in which the hydraulically acting system also comprises an actuable electric motor for adjusting the axial position of the control piston. It is advantageously now possible to..electronically adjust the preloading of the coil spring and thereby the height of the shock absorber in the compressed position by suitable supply of current to the electric motor. This can be done both when the motorcycle is stationary and when it is being driven, and thus makes it possible to adjust the damping properties and characteristics of the shock absorber at any desired moment, for example by means of a switch on the handlebars of a motorcycle on which the shock absorber is used. The pressure means in this case advantageously ensure that the power required of the electric motor is reduced and/or the adjustment time is shortened. The reduction in the power required is important in particular for use on motorcycles, since motorcycles have a relatively weak battery as power source.

Further preferred embodiments are defined in the subclaims.

The invention also relates to a motorcycle according to claim 17.

The invention will be explained in more detail with reference to the appended drawings, in which:
Fig. 1 shows a perspective view, partially in section, of a preferred embodiment of the shock absorber for a motorcycle according to the invention;
Fig. 2 shows a bottom view of Fig. 1;
Fig. 3 shows a cross-sectional view on line III-III in Fig. 1;
Fig. 4 shows a cross-sectional view on line IV-IV in Fig. 2;
Fig. 5 shows a view of part of Fig. 4 on an enlarged scale; and
Fig. 6 shows a view of part of Fig. 5 on an enlarged scale.

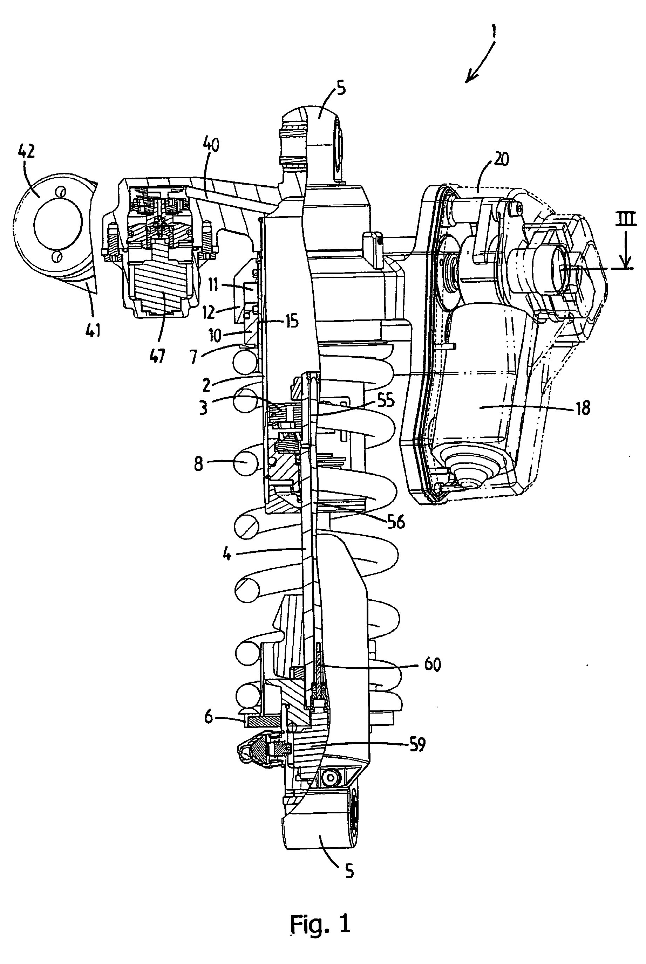

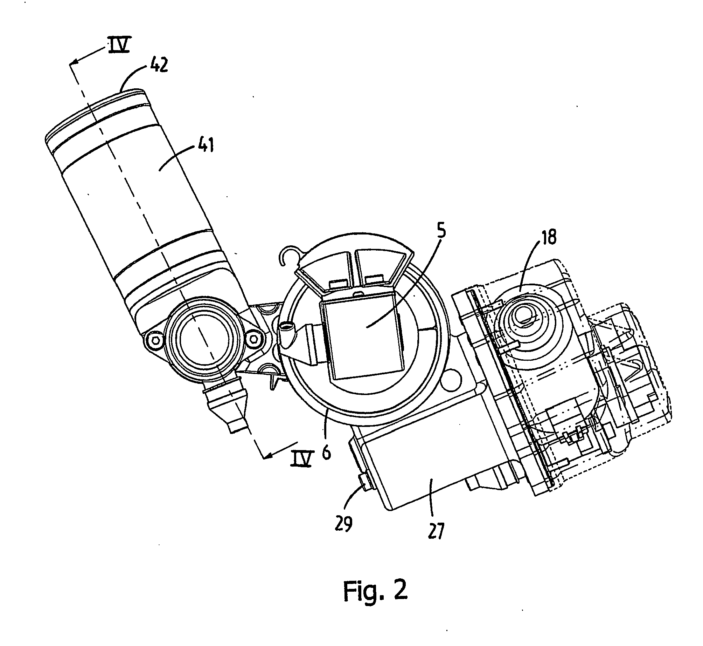

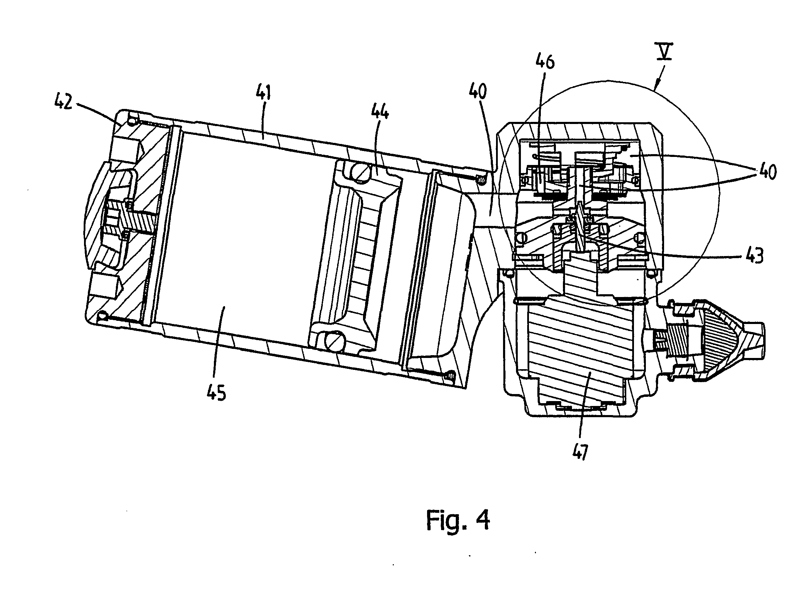

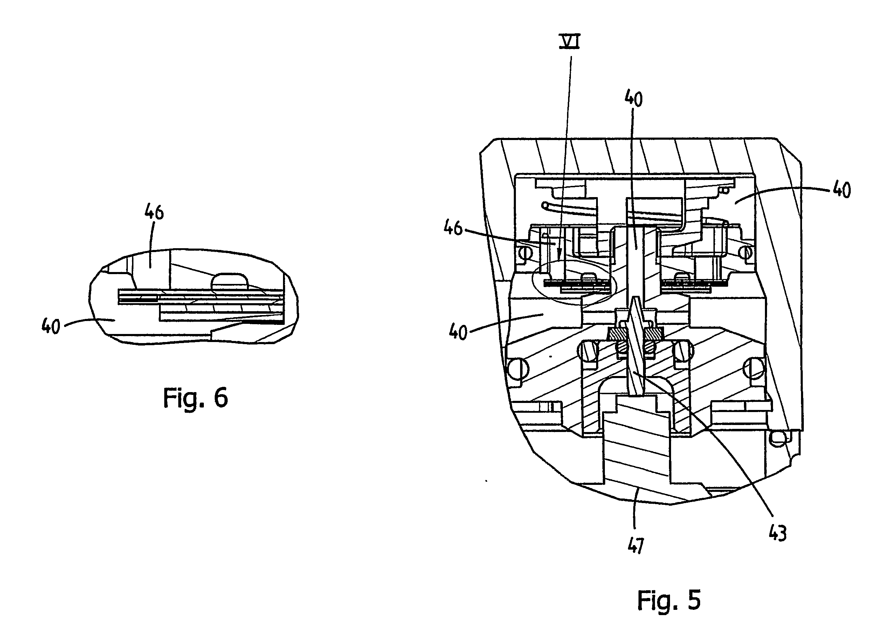

The shock absorber is denoted overall by reference numeral 1 in Fig. 1-6 and comprises an oil-filled damper cylinder 2 and a damper piston 3 which is displaceable therein. The damper piston 3 is fitted to the end of a piston rod 4. At both ends of the damper cylinder 2 and the piston rod 4 there are assembly parts 5, which are in this case formed by assembly eyelets in which there is a bearing arrangement. Between the assembly parts 5 there are a lower spring base 6 and an upper spring base 7, against which a coil spring 8 is supported. The lower spring base 6 is delimited at the bottom with respect to the bottom assembly part 5.

The upper spring base 7 is connected to the lower end of an annular setting piston 10 which is accommodated in a setting chamber 11 in such a manner that it can be moved up and down. The setting chamber 11 is delimited by a cylindrical housing part 12 which is connected to the outer circumferential wall of the damper cylinder 2. The setting piston 10 and the outer circumferential wall of the damper cylinder 2 are provided with projecting edge parts 15 which together prevent the setting piston 10 from being able to shoot too far out of the setting chamber 11.

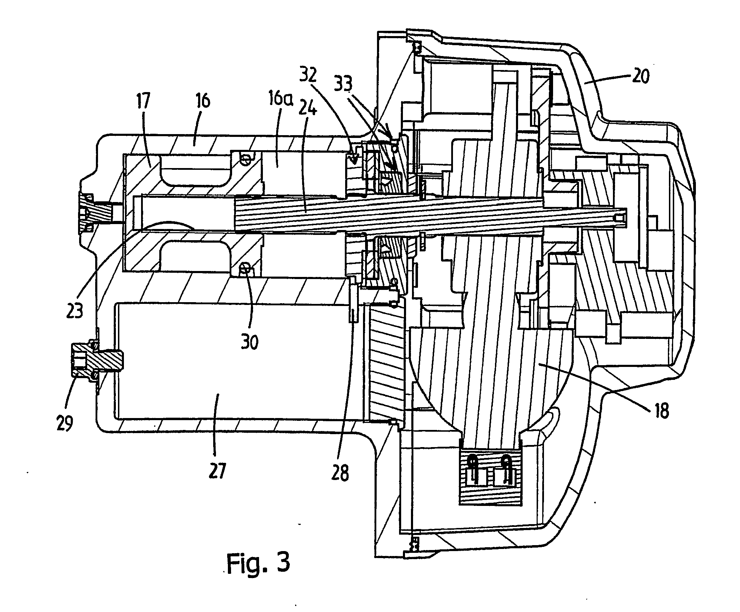

The setting piston 10 and the setting chamber 11 form part of a hydraulically acting system, within which the pressure can be varied in order to displace the setting piston 10 in the setting chamber 11 and to adjust it upwards or downwards according to the position of the spring base 7.. For this purpose, the hydraulically acting system also comprises a control cylinder 16 which delimits a control chamber 16a, a control piston 17 which can be displaced therein and an electric motor 18 for displacing the control piston 17 in the axial direction. These components are accommodated in a housing part 20 which adjoins the housing part 12 and is illustrated in partially transparent form in Fig. 1. The action of the control cylinder 16, the control piston 17 and the electric motor 18 will now be explained in more detail with reference to Fig. 3.

The.control piston 17 can be moved to and fro in the axial direction within the control chamber 16a and is limited with respect to rotation by wall parts of the control cylinder 16. The control piston 17 is provided with an internally threaded bore 23 into which a threaded spindle 24 is screwed. The threaded spindle 24 can be driven by the electric motor 18 and then ensures that the control piston 17 moves in the axial direction. The control chamber 16a, on the left-hand side of the control piston 17, is in hydraulic communication with the setting chamber 11 via a through-flow passage, which is not shown in more detail.

On the right-hand side of the control piston .17, there is gas pressure in the control chamber 16a which is related to the pressure which occurs as a result of the minimum preloading of the coil spring 8 in the hydraulic system. This pressure is at least greater than ambient pressure. In the further load-free state of the shock absorber 1, the gas pressure is set to a value greater than 5 bar, more particularly greater than 8 bar. This pressure contributes to moving the control piston 17 to the left, and thereby reduces the power required of the electric motor 18 if the spring base 7 needs to be pushed downwards and/or shortens the time required for adjusting the position of the spring base 7 downwards.

Beneath the control chamber 16a there is a gas chamber 27 which, via a groove 28, is in communication with that part of the control chamber 16a which is on the right-hand side of the control piston 17. The gas chamber has a volume which is greater than half the volume of the control chamber 16a. The gas chamber 27 is provided with an inlet valve 29 for externally pressurizing the gas chamber 27 with a quantity of gas. The pressurized gas cannot mix with the hydraulic medium, in this case formed by oil, which is on the other side of the control piston 17 in the hydraulic system. For this purpose, the control piston 17 is provided with a gasket ring 30. Furthermore, the control chamber 16a and the gas chamber 27 are sealed on the side of the electric motor 18. For this purpose, the threaded spindle 24 is guided rotatably and in sealed fashion through a closure plate with gasket rings.33 accommodated therein.

The electric motor 18 is formed by a DC motor, in particular a stepper motor, which if desired can be actuated remotely, for example from the handlebars of the motorcycle, using an operating switch.

At the topside, the damper cylinder 2 is in communication, via a connecting passage 40, with a pressure pot 41. On the left-hand side, the pressure pot 41 is closed off by a cover 42, and on the right-hand side it is in communication to a greater or lesser extent with the damper cylinder 2 via an adjustable valve body 43. A displaceable separating element 44, which is in this case formed by a piston body, is accommodated in the pressure pot 41. On the left-hand side, the piston body delimits a gas reservoir 45 which is used to collect the oil displaced by the volume of the piston rod 4 during a compressing movement of the shock absorber 1. The compressing movement is in this case partly damped to a greater or lesser extent by inhibiting the flow of oil from the damper cylinder 2 to the pressure pot 41 by suitable adjustment of the valve body 43 in the connecting passage 40. Furthermore, a through-flow passage 46, in which a resistance is incorporated by means of spring plates, is provided as a pressure relief feature. For return flow of the oil from the pressure pot 41 to the damper cylinder 2, there is a one-way valve which does not exert a particularly high resistance to the flow of oil in this direction.

The valve body 43 is in this case formed by a needle shut-off member which extends partly within the connecting passage 40. The axial position of the valve body 43 in the connecting passage 40 can be adjusted by means of a threaded spindle which can be rotated by an electric motor 47. The electric motor 47 is formed by a stepper motor which if desired can be actuated remotely, for example from the handlebars of the motorcycle, using an operating switch. In this way, the inward damping of the shock absorber 1 can be adjusted quickly and efficiently independently of the outward damping.

In addition to the embodiment shown, numerous variants are possible. For example, it is possible to use different types of valve bodies, the position of which can be adjusted with the aid of an electric motor. As an alternative to gas pressure, the pressure means may also comprise a spring element which bears against the control piston. As an alternative to threaded spindles, it is also possible to provide other types of transmissions between the electric motors and the control piston or the valve bodies. The threaded spindle can be connected to the electric motor, but may also directly form the output shaft of the electric motor. The electric motors can optionally be provided with current from the vehicle battery directly via switches which can be operated by the rider. However, it is also possible to provide an automated control system with sensors for actuating the electric motors. The pressure means, the control of the position of the control piston by the electric motor for adjusting the spring preloading, the control of the position of the valve body in the connecting passage to the pressure pot by the electric motor for adjusting the inward damping, and the control of the position of the valve body in the through-flow passage through the piston rod by the electric motor for adjusting the outward damping, can also be used independently of one another for a shock absorber; i.e. the others may then not be adjustable or may be adjustable in a different way. It is preferable for the three adjustment options to be used in combination with one another, resulting in a multiply adjustable shock absorber which is reliable in use and the properties of which can be adapted automatically or manually by a rider as desired, as a function of the particular conditions of use.

## Claims

1. Shock absorber for use in vehicles, in particular for a motorcycle, comprising:
- a hydraulic damper cylinder (2) having a damping medium and a damper piston (3) which can be displaced within the damper cylinder (2);
- a piston rod (4) connected to the damper piston (3);
- assembly parts (5) provided at the free ends of the damper cylinder (2) and the piston rod (4);
- first and second spring bases (6, 7), provided in the vicinity of the assembly parts (5), with a compression spring (8) enclosed between them;
- a hydraulically acting system for adjusting the axial position of at least one of the spring bases (7) with respect to the associated assembly part (5);
the hydraulically acting system comprising a setting chamber (11) in which there is an axially displaceable setting piston (10) interacting with the spring base (7) located in its vicinity, and a control cylinder (16) with a control chamber (16a) and a control piston (17) displaceable therein,
and the control chamber (16a) at one end being in hydraulic communication with the setting chamber (11), **characterised in that** pressure means being provided for exerting a pressure greater than ambient pressure on the opposite side of the control piston (17) from the hydraulic connection to the setting chamber (11), in which the hydraulically acting system comprises an actuable electric motor (18) or a manual operating feature for adjusting the axial position of the control piston (17).

2. Shock absorber according to claim 1, in which the pressure means are designed to exert a pressure greater than 5 bar on the opposite side of the control piston (17) from the hydraulic connection to the setting chamber (11).

3. Shock absorber according to one of the preceding claims, in which the pressure means comprise a gas chamber (27) in which there is a pressurized gas volume, the control chamber (16a) being in communication with the gas chamber (27) on the opposite side from the hydraulic connection to the setting chamber (11).

4. Shock absorber according to claim 3, in which the gas chamber (27) is provided with an inlet valve (29) for externally pressurizing the gas chamber (27).

5. Shock absorber according to claim 3 or 4, in which the gas chamber (27) has a volume which is greater than half the volume of the control chamber (16a).

6. Shock absorber according to one of the preceding claims, in which the electric motor (18) is a DC motor.

7. Shock absorber according to claim 6, in which the electric motor (18) is a stepper motor.

8. Shock absorber according to one of the claims 5-7, in which the control piston (17) is accommodated substantially nonrotatably in the control chamber (16a) and is provided with a cavity with an internal screw thread (23) for interacting with a threaded spindle (24), which in turn is connected to the electric motor (18) such that it can be driven in rotation.

9. Motorcycle comprising at least one shock absorber (1) according to one of the preceding claims.

## Patentansprüche

1. Stoßdämpfer zum Einsatz in Fahrzeugen, insbesondere für ein Motorrad, umfassend:
- einen hydraulischen Dämpfungszylinder (2) mit einem Dämpfungsmedium und einem Dämpfungskolben (3), welcher innerhalb des Dämpfungszylinders (2) versetzt werden kann;
- eine Kolbenstange (4), welche mit dem Dämpfungskolben (3) verbunden ist;
- Bauelemente (5), welche an den freien Enden des Dämpfungszylinders (2) und der Kolbenstange (4) vorhanden sind;
- erste und zweite Federbasen (6, 7), welche in der Nähe der Bauelemente (5) vorhanden sind, wobei eine Kompressionsfeder (8) zwischen diesen eingeschlossen ist;
- ein hydraulisch agierendes System, um die axiale Position von mindestens einer der Federbasen (7) bezüglich des zugeordneten Bauelements (5) einzustellen; wobei das hydraulisch agierende System eine Stellkammer (11), in welcher sich ein axial verstellbarer Stellkolben (10) befindet, welcher mit der Federbasis (7), welche in seiner Nähe angeordnet ist, zusammenwirkt, und einen Steuerzylinder (16) mit einer Steuerkammer (16a) und einem Steuerkolben (17), welcher darin versetzbar ist, umfasst,
und wobei sich die Steuerkammer (16a) an einem Ende in einer hydraulischen Kommunikation mit der Stellkammer (11) befindet, **dadurch gekennzeichnet, dass** Druckmittel vorhanden sind, um einen Druck, welcher größer als ein Umgebungsdruck ist, auf die gegenüberliegende Seite des Steuerkolbens (17) über die hydraulische Verbindung zu der Stellkammer (11) auszuüben, wobei das hydraulisch agierende System einen betätigbaren elektrischen Motor (18) oder ein manuelles Betriebsmerkmal umfasst, um die axiale Position des Steuerkolbens (17) einzustellen.

2. Stoßdämpfer nach Anspruch 1, **dadurch gekennzeichnet, dass** die Druckmittel ausgestaltet sind, um einen Druck von mehr als 5 bar auf die gegenüberliegende Seite des Steuerkolbens (17) über die hydraulische Verbindung zu der Stellkammer (11) auszuüben.

3. Stoßdämpfer nach einem der vorhergehenden Ansprüche, **dadurch gekennzeichnet, dass** die Druckmittel eine Gaskammer (27) umfassen, in welcher ein Gasvolumen unter Druck gesetzt wird, wobei sich die Stellkammer (16a) in Kommunikation mit der Gaskammer (27) auf der gegenüberliegenden Seite über die hydraulische Verbindung zu der Stellkammer (11) befindet.

4. Stoßdämpfer nach Anspruch 3, **dadurch gekennzeichnet, dass** die Gaskammer (27) mit einem Einlassventil (29) versehen ist, um die Gaskammer (27) von außen unter Druck zu setzen.

5. Stoßdämpfer nach Anspruch 3 oder 4, **dadurch gekennzeichnet, dass** die Gaskammer (27) ein Volumen aufweist, welches größer als die Hälfte des Volumens der Stellkammer (16a) ist.

6. Stoßdämpfer nach einem der vorhergehenden Ansprüche, **dadurch gekennzeichnet, dass** der elektrische Motor (18) ein Gleichstrommotor ist.

7. Stoßdämpfer nach Anspruch 6, **dadurch gekennzeichnet, dass** der elektrische Motor (18) ein Schrittmotor ist.

8. Stoßdämpfer nach einem der Ansprüche 5-7, **dadurch gekennzeichnet, dass** der Steuerkolben (17) im Wesentlichen nicht drehbar in der Steuerkammer (16a) angeordnet ist und mit einem Hohlraum mit einem Innengewinde (23) versehen ist, um mit einer Spindel (24) mit Gewinde zusammenzuwirken, welche wiederum mit dem elektrischen Motor (18) verbunden ist, so dass sie in Drehung versetzt werden kann.

9. Motorrad, welches mindestens einen Stoßdämpfer (1) nach einem der vorhergehenden Ansprüche umfasst.

## Revendications

1. Amortisseur destiné à être utilisé sur des véhicules, en particulier pour une motocyclette, comprenant :
un cylindre d'amortisseur hydraulique (2) ayant un moyen d'amortissement et un piston d'amortisseur (3) qui peut être déplacé à l'intérieur du cylindre d'amortisseur (2) ;
une tige de piston (4) raccordée au piston d'amortisseur (3) ;
des parties d'assemblage (5) prévues au niveau des extrémités libres du cylindre d'amortisseur (2) et de la tige de piston (4) ;
des première et seconde bases de ressort (6, 7) prévues à proximité des parties d'assemblage (5), avec un ressort de compression (8) enfermé entre elles ;
un système d'actionnement hydraulique pour ajuster la position axiale d'au moins l'une des bases de ressort (7) par rapport à la partie d'assemblage (5) associée ;
le système d'actionnement hydraulique comprenant une chambre de réglage (11) dans laquelle il y a un piston de réglage (10) axialement déplaçable interagissant avec la base de ressort (7) positionnée à son voisinage, et un cylindre de commande (16) avec une chambre de commande (16a) et un piston de commande (17) déplaçable à l'intérieur de cette dernière,
et la chambre de commande (16a), au niveau d'une extrémité, étant en communication hydraulique avec la chambre de réglage (11), **caractérisé en ce que** les moyens de pression sont prévus pour exercer une pression supérieure à la pression ambiante sur le côté opposé du piston de commande (17), de la connexion hydraulique à la chambre de réglage (11), dans lequel le système d'actionnement hydraulique comprend un moteur électrique (18) activable ou une caractéristique de fonctionnement manuelle pour ajuster la position axiale du piston de commande (17).

2. Amortisseur selon la revendication 1, dans lequel les moyens de pression sont conçus pour exercer une pression supérieure à 5 bar sur le côté opposé du piston de commande (17), de la connexion hydraulique à la chambre de réglage (11).

3. Amortisseur selon l'une quelconque des revendications précédentes, dans lequel les moyens de pression comprennent une chambre de gaz (27) dans laquelle il y a un volume de gaz sous pression, la chambre de commande (16a) étant en communication avec la chambre de gaz (27) sur le côté opposé, de la connexion hydraulique à la chambre de réglage (11).

4. Amortisseur selon la revendication 3, dans lequel la chambre de gaz (27) est prévue avec une soupape d'entrée (29) pour mettre extérieurement la chambre de gaz (27) sous pression.

5. Amortisseur selon la revendication 3 ou 4, dans lequel la chambre de gaz (27) a un volume qui est supérieur à la moitié du volume de la chambre de commande (16a).

6. Amortisseur selon l'une quelconque des revendications précédentes, dans lequel le moteur électrique (18) est un moteur à courant continu.

7. Amortisseur selon la revendication 6, dans lequel le moteur électrique (18) est un moteur pas à pas.

8. Amortisseur selon l'une quelconque des revendications 5 à 7, dans lequel le piston de commande (17) est logé de manière sensiblement non rotative dans la chambre de commande (16a) et est prévu avec une cavité ayant un filetage de vis interne (23) pour interagir avec une broche filetée (24), qui est raccordée à son tour au moteur électrique (18) de sorte qu'elle peut être entraînée en rotation.

9. Motocyclette comprenant au moins un amortisseur (1) selon l'une quelconque des revendications précédentes.
